# EUROPÄISCHE PATENTANMELDUNG

(11) **EP 3 745 571 A1**
(43) Veröffentlichungstag der Anmeldung: **02.12.2020**
(21) Anmeldenummer: 19177058.5
(22) Anmeldetag: 28.05.2019
(51) Int. Cl.: H02M 1/32, H02M 5/458, H02M 7/00, H02M 7/48, B23K 10/00, B23K 9/32, B23K 37/00, H02M 1/00

(54) **INVERTERSTROMQUELLE**

(71) Anmelder: Fronius International GmbH, 4643 Pettenbach (AT)
(72) Erfinder: Itzenberger, Daniel, 4643 Pettenbach (AT); Teier, Ernst, 4643 Pettenbach (AT); Volland, Angelika, 4643 Pettenbach (AT)
(74) Vertreter: Isarpatent

(57) **Zusammenfassung**

Beschrieben wird eine Inverterstromquelle (1) für ein Schweißgerät mit:
einer Netz-Gleichrichterschaltung (5) zur Gleichrichtung einer mehrphasigen NetzWechselspannung in eine Zwischenkreisspannung (U_{ZK}); einem Zwischenkreis (6), der mindestens einen Zwischenkreiskondensator (6A) als Energiespeicher und eine Begrenzungsschaltung (6B) aufweist, welche eine in dem Zwischenkreiskondensator (6A) gespeicherte Energie bei einem auftretenden Ereignis absenkt; und mit einer Wechselrichterschaltung (7), welche die Zwischenkreisspannung (U_{ZK}) in eine Ausgangswechselspannung für einen mit der Inverterstromquelle (1) verbundenen Schweißtransformator (8) des Schweißgerätes umwandelt.

## Beschreibung

Die Erfindung betrifft eine Inverterstromquelle für ein Schweißgerät, die in einen Schaltschrank montierbar ist und die sich insbesondere für Widerstandspunktschweißen eignet.

Ein Schweißgerät verfügt über ein Leistungsteil, welches an ein Stromversorgungsnetz anschließbar ist. Dieses Leistungsteil liefert einen Schweißstrom zur Durchführung eines Schweißvorganges. Eine Steuerung des Schweißgerätes ist für die Einstellung bzw. die Regelung des Schweißstromes vorgesehen. Die Steuerung regelt den zeitlichen Ablauf des Schweißprozesses, wobei Parametersollwerte der Schweißparameter eingestellt und/oder überwacht werden können. Die meisten Leistungsteile verfügen über einen Zwischenkreis als Energiespeicher. Der Zwischenkreis weist dabei mindestens einen Zwischenkreiskondensator als Energiespeicher auf. Herkömmliche Zwischenkreise weisen eine Kapazität auf, die zu einem großen Teil durch Elektrolytkondensatoren des Zwischenkreises bereitgestellt werden. Die Verwendung von Elektrolytkondensatoren im Zwischenkreis hat jedoch den Nachteil, dass Elektrolytkondensatoren eine Elektrolytflüssigkeit beinhalten, die bei Undichtigkeit des Elektrolytkondensators entweichen kann. Demzufolge sind Elektrolytkondensatoren empfindlich gegenüber Beschleunigungskräften. Weiterhin bedarf die Verwendung von Elektrolytkondensatoren innerhalb des Zwischenkreises einer Symmetrisierung der anliegenden Spannung. Diese Symmetrisierung wird mithilfe von Symmetriewiderständen am Zwischenkreis erreicht. Durch die Symmetriewiderstände kommt es zu ungewollten Leistungsverlusten. Durch die Verwendung von Elektrolytkondensatoren in dem Zwischenkreis wird zudem die Betriebslebensdauer zum Betreiben des Zwischenkreises bzw. des Leistungsteils begrenzt.

Es ist daher eine Aufgabe der vorliegenden Erfindung, eine Inverterstromquelle für ein Schweißgerät zu schaffen, welches die oben genannten Nachteile vermeidet, und das insbesondere Leistungsverluste reduziert.

Eine weitere Aufgabe der Erfindung besteht darin, eine Inverterstromquelle für einen Schaltschrank zu schaffen, die ein geringes Gewicht aufweist und die in einem Schaltschrank einfach montierbar und wartbar ist.

Die Erfindung schafft gemäß einem ersten Aspekt eine Inverterstromquelle für ein Schweißgerät miteiner Netz-Gleichrichterschaltung zur Gleichrichtung einer mehrphasigen Netz-Wechseispannung in eine Zwischenkreisspannung,
einem Zwischenkreis, der mindestens einen Zwischenkreiskondensator als Energiespeicher und eine Begrenzungsschaltung aufweist, welche eine an dem Zwischenkreiskondensator auftretende Erhöhung der Zwischenkreisspannung zur Reduzierung der in dem Zwischenkreis gespeicherten Energie absenkt, und mit
einer Wechselrichterschaltung, welche die Zwischenkreisspannung in eine Ausgangswechselspannung für einen mit der Inverterstromquelle verbundenen Schweißtransformator des Schweißgerätes umwandelt.

Die erfindungsgemäße Inverterstromquelle verfügt somit über eine Begrenzungsschaltung, welche die an dem Zwischenkreiskondensator auftretende Erhöhung der Zwischenkreisspannung absenkt. Hierdurch wird die Betriebssicherheit der erfindungsgemäßen Inverterstromquelle vorteilhafterweise erhöht.

Bei einer möglichen Ausführungsform der erfindungsgemäßen Inverterstromquelle senkt die Begrenzungsschaltung am Ende eines Schweißvorganges die in den Zwischenkreis fließende Energie ab.

An dem Schweißvorgang können dabei eine oder mehrere Inverterstromquellen beteiligt sein, die beispielsweise innerhalb einer Schweißzelle parallel zueinander verschaltet sind. Eine Erhöhung der Zwischenkreisspannung innerhalb eines Zwischenkreises der Inverterstromquelle kann demnach auch durch ein anderes Schweißgerät, welches an demselben Schweißvorgang beteiligt ist, hervorgerufen werden. Die in der Inverterstromquelle des Schweißgerätes vorgesehene Begrenzungsschaltung senkt eine an dem Zwischenkreiskondensator des Zwischenkreises der betreffenden Inverterstromquelle auftretende Erhöhung der Zwischenkreisspannung ab.

Bei einer möglichen Ausführungsform der erfindungsgemäßen Inverterstromquelle ist die Begrenzungsschaltung des Zwischenkreises parallel zu dem Zwischenkreiskondensator verschaltet.

Bei einer möglichen Ausführungsform der erfindungsgemäßen Inverterstromquelle wird die Kapazität des Zwischenkreises überwiegend durch einen oder mehrere Folienkondensatoren bereitgestellt.

Der Einsatz eines Folienkondensators macht es möglich, dass Symmetriewiderstände im Zwischenkreis entfallen können, sodass eine Reduktion der Standby-Verluste erreicht wird. Durch die Verwendung eines Folienkondensators wird zudem die Betriebslebensdauer des Leistungsteils erhöht. Eine an dem Folienkondensator auftretende Anhebung bzw. Erhöhung der Spannung, insbesondere bei Lastabwurf, wird durch die in dem Zwischenkreis vorgesehene Begrenzungsschaltung zuverlässig verhindert.

Bei einer weiteren möglichen Ausführungsform der erfindungsgemäßen Inverterstromquelle weist die Begrenzungsschaltung des Zwischenkreises ein steuerbares Schaltelement und einen dazu seriell verschalteten Hochleistungswiderstand auf. Der Hochleistungswiderstand kann die überschüssige Energie des Zwischenkreiskondensators in Wärme umsetzen.

Bei einer weiteren möglichen Ausführungsform der erfindungsgemäßen Inverterstromquelle weist das Schaltelement der Begrenzungsschaltung einen Halbleiterschalter auf.

Der Halbleiterschalter wird beispielsweise durch einen MOSFET gebildet. Ein derartiger Halbleiterschalter ist einfach und schnell ansteuerbar und benötigt einen geringen Raum.

Bei einer weiteren möglichen Ausführungsform der erfindungsgemäßen Inverterstromquelle wird das Schaltelement der Begrenzungsschaltung durch eine Steuerung der inverterstromquelle zeitweise bei elektrischer Überspannung an dem Zwischenkreis eingeschaltet, sodass sich der Zwischenkreiskondensator über den Hochleistungswiderstand der Begrenzungsschaltung zur Absenkung der Zwischenkreisspannung teilweise entlädt, um so wieder eine normale Betriebsspannung zu erreichen.

Durch die relativ schnelle Entladung des Zwischenkreiskondensators des Zwischenkreises kann auf ein Gehäuse der Inverterstromquelle verzichtet werden. Dies führt einerseits zu einer Gewichtsreduktion der Inverterstromquelle und andererseits erlaubt dies eine schnellere Montage bzw. Demontage der Inverterstromquelle innerhalb eines Schaltschrankes.

Bei einer weiteren möglichen Ausführungsform der erfindungsgemäßen Inverterstromquelle sind die Begrenzungsschaltung und die Steuerung der Inverterstromquelle galvanisch voneinander getrennt.

Vorzugsweise erfolgt die galvanische Trennung mit Hilfe eines Optokopplers. Die Leuchtdiode des Optokopplers erlischt entweder bei Ausschalten der lnverterstromquelle, beispielsweise mittels eines Hauptschalters, oder gesteuert durch eine Steuerelektronik bei detektierter Überspannung am Zwischenkreis. Im Normalbetrieb leuchtet die Leuchtdiode, sodass das Schaltelement der Begrenzungsschaltung sperrt und die Zwischenkreisspannung auf einem normalen Spannungspegel hält.

Bei einer weiteren möglichen Ausführungsform der erfindungsgemäßen Inverterstromquelle schaltet die Steuerung der Inverterstromquelle beim Ausschalten der Inverterstromquelle das Schaltelement der Begrenzungsschaltung des Zwischenkreises derart, dass sich der Zwischenkreiskondensator über den Hochleistungswiderstand der Begrenzungsschaltung innerhalb eines vorgegebenen Entladezeitraums auf ein unkritisches Spannungsniveau entlädt.

Die Ausschaltung der inverterstromquelle kann beispielsweise über eine Fernsteuerung oder mittels eines manuell betätigbaren Hauptschalters erfolgen.

Bei einer weiteren möglichen Ausführungsform der erfindungsgemäßen Inverterstromquelle wird der Hochleistungswiderstand der Begrenzungsschaltung durch einen anliegenden Kühlkörper der Inverterstromquelle gekühlt.

Bei einer möglichen Ausführungsform weist der Kühlkörper zur Kühlung des Leistungsbauteils der Inverterstromquelle eine Fluidkühlung auf.

Bei einer weiteren möglichen Ausführungsform der erfindungsgemäßen Inverterstromquelle weist die Netz-Gleichrichterschaltung steuerbare Thyristor-Diodenmodule auf, welche die an dem Netzanschluss der Inverterstromquelle anliegende mehrphasige Netz-Wechselspannung zur Erzeugung der Zwischenkreisspannung gleichrichtet.

Bei einer weiteren möglichen Ausführungsform der erfindungsgemäßen Inverterstromquelle weist die Wechselrichterspannung steuerbare IGBT-Module auf, die in einer Vollbrücke verschaltet sind, welche die Zwischenkreisspannung in die einphasige Ausgangswechselspannung für den Schweißstromtransformator des Schweißgerätes umwandelt.

Bei einer weiteren möglichen Ausführungsform der erfindungsgemäßen Inverterstromquelle sind die IGBT-Module der Wechselrichterschaltung und/oder die Thyristor-Diodenmodule der Netz-Gleichrichterschaltung mit dem Kühlkörper und einer Montageplatte der Inverterstromquelle verbunden.

Bei einer weiteren möglichen Ausführungsform der erfindungsgemäßen Inverterstromquelle ist die Montageplatte der Inverterstromquelle über einen Kondensator mit geringer Kapazität der Netzfilterschaltung mit dem auf Erdpotential liegenden Schaltschrankgehäuse des Schaltschrankes verschaltet.

Bei einer möglichen Ausführungsform der erfindungsgemäßen Inverterstromquelle ist die Montageplatte über Isolierhülsen in das Schaltschrankgehäuse des Schaltschrankes montiert.

Bei einer weiteren möglichen Ausführungsform der erfindungsgemäßen Inverterstromquelle wird die Entladung des Zwischenkreiskondensators des Zwischenkreises mittels eines Sensors detektiert und der Steuerung der Inverterstromquelle gemeldet.

Bei einer weiteren möglichen Ausführungsform der erfindungsgemäßen Inverterstromquelle zeigt die Steuerung über ein Anzeigeelement die Entladung des Zwischenkreiskondensators des Zwischenkreises an.

Bei einer möglichen Ausführungsform können diese Anzeigeelemente durch LEDs gebildet werden, die in dem Schaltschrank vorgesehen sind und beispielsweise leuchten, falls noch eine Spannung mit einer gewissen Spannungshöhe an dem Zwischenkreiskondensator anliegt. Hierdurch kann die Betriebssicherheit der Inverterstromquelle erhöht werden.

Bei einer weiteren möglichen Ausführungsform ist der Zwischenkreiskondensator, der mindestens einen Folienkondensator aufweist, in einem Zwischenkreiskondensatorblock integriert. Dieser Zwischenkreiskondensatorblock kann als strukturelle Komponente zur Montage weiterer Komponenten genutzt werden.

Bei einer weiteren möglichen Ausführungsform der erfindungsgemäßen Inverterstromquelle liefert die Inverterstromquelle eine einphasige Ausgangswechselspannung für einen Schweißtransformator eines Schweißgerätes.

Bei einer weiteren möglichen Ausführungsform der erfindungsgemäßen Inverterstromquelle ist die Inverterstromquelle gehäuselos in einen Schaltschrank montierbar.

Bei einer weiteren möglichen Ausführungsform der erfindungsgemäßen Inverterstromquelle weist diese Handgriffe zur Handhabe der gehäuselosen Inverterstromquelle auf.

Die Erfindung schafft gemäß einem weiteren Aspekt ein Schweißgerät mit einer Inverterstromquelle, welche aufweist:
eine Netz-Gleichrichterschaltung zur Gleichrichtung einer mehrphasigen Netzwechseispannung in eine Zwischenkreisspannung,
einen Zwischenkreis, der mindestens einen Zwischenkreiskondensator als Energiespeicher und eine Begrenzungsschaltung aufweist, welche eine an dem Zwischenkreiskondensator auftretende Erhöhung der Zwischenkreisspannung zur Reduzierung der in dem Zwischenkreis gespeicherten Energie absenkt und
eine Wechselrichterschaltung, welche die Zwischenkreisspannung in eine Ausgangswechselspannung für einen mit der Inverterstromquelle verbundenen Schweißtransformator des Schweißgerätes umwandelt, wobei die von der Inverterstromquelle abgegebene einphasige Ausgangswechselspannung primärseitig in einen Schweißtransformator des Schweißgerätes eingespeist wird, welcher sekundärseitig über einen Gleichrichter mit einer Schweißzange des Schweißgerätes verbunden ist.

Bei einer möglichen Ausführungsform des erfindungsgemäßen Schweißgerätes ist das Schweißgerät ein Widerstandspunktschweißgerät.

Die Erfindung schafft ferner gemäß einem weiteren Aspekt eine Inverterstromquelle für einen Schaltschrank mit
einem Zwischenkreiskondensatorblock eines Zwischenkreises zur Energiespeicherung, der über eine Montageplatte in ein Schaltschrankgehäuse des Schaltschrankes montierbar ist und mit
einem mit dem Zwischenkreiskondensatorblock verbundenen Kühlkörper zur Kühlung von Leistungsbauteilen der Inverterstromquelle,
wobei an dem Kühlkörper mindestens ein Hochleistungswiderstand angebracht ist, über welchen der Zwischenkreiskondensatorblock des Zwischenkreises innerhalb eines definierten Entladezeitraumes entladbar ist.

Bei einer möglichen Ausführungsform der erfindungsgemäßen Inverterstromquelle weist der Zwischenkreiskondensatorblock des Zwischenkreises mindestens einen Folienkondensator auf, der über ein steuerbares Schaltelement innerhalb des Entladezeitraumes entladbar ist.

Bei einer möglichen Ausführungsform ist das Schaltelement durch eine Steuerung der Inverterstromquelle automatisch zum Entladen des Zwischenkreiskondensatorblockes des Zwischenkreises über den Hochleistungswiderstand geschaltet. Diese Entladung des Zwischenkreiskondensatorblockes des Zwischenkreises kann bei einer möglichen Ausführungsform der Inverterstromquelle mittels eines Sensors detektiert und der Steuerung der Inverterstromquelle gemeldet werden, wobei die Steuerung vorzugsweise über ein Anzeigeelement die Entladung des Zwischenkreiskondensatorblockes des Zwischenkreises anzeigt.

Im Weiteren werden bevorzugte Ausführungsformen der unterschiedlichen Aspekte der erfindungsgemäßen Inverterstromquelle unter Bezugnahme auf die beigefügten Figuren näher erläutert.

Es zeigen:
- Fig. 1: ein Schaltkreisdiagramm zur Erläuterung eines Ausführungsbeispiels der erfindungsgemäßen Inverterstromquelle;
- Fig. 2: ein Schaltkreisdiagramm zur Erläuterung eines exemplarischen Ausführungsbeispiels eines in der erfindungsgemäßen Inverterstromquelle verwendeten Zwischenkreises;
- Fig. 3: ein Schaltkreisdiagramm zur Darstellung einer Implementierungsmöglichkeit einer in dem Zwischenkreis gemäß Fig. 2 vorgesehenen Begrenzungsschaltung;
- Fig. 4: ein Schaltkreisdiagramm zur Darstellung der Funktionsweise eines innerhalb der erfindungsgemäßen Inverterstromquelle vorgesehenen Netzfilters;
- Fig. 5: eine perspektivische Explosionsdarstellung einer Ausführungsvariante einer erfindungsgemäßen Inverterstromquelle für einen Schaltschrank;
- Fig. 6: eine Darstellung einer möglichen Implementierungsvariante eines innerhalb der Inverterstromquelle enthaltenen Zwischenkreiskondensatorblockes;
- Fig. 7: eine perspektivische schematische Darstellung eines Ausführungsbeispiels eines innerhalb der erfindungsgemäßen inverterstromquelle eingesetzten Kühlkörpers;
- Fig. 8: eine Darstellung eines Widerstandspunktschweißgerätes mit einer Inverterstromquelle gemäß der Erfindung;
- Fig. 9, 10: zeigen Signaldiagramme Erläuterung der Funktionsweise der erfindungsgemäßen Inverterstromquelle.

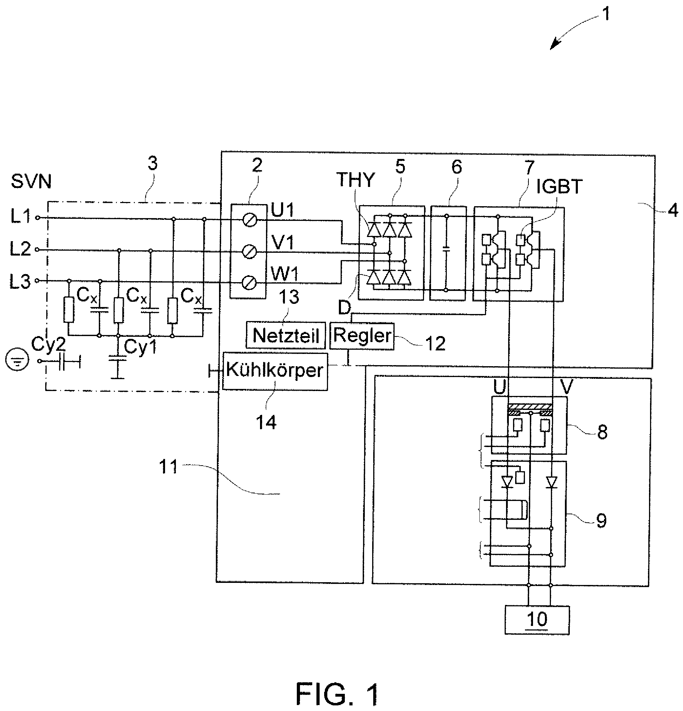

Fig. 1 zeigt schematisch ein Ausführungsbeispiel einer erfindungsgemäßen Inverterstromquelle 1. Die Inverterstromquelle 1 kann bei einer möglichen Ausführungsform für ein Schweißgerät SG verwendet werden. Die Inverterstromquelle 1 verfügt über einen Netzanschluss 2 zum Anschluss an ein Stromversorgungsnetz SVN. Dieses Stromversorgungsnetz SVN liefert bei einer möglichen Ausführungsform eine mehrphasige Wechselspannung L1, L2, L3 an entsprechende Anschlüsse des Netzanschlusses 2, wobei ein Netzfilter 3 vorgesehen sein kann, um die elektromagnetische Verträglichkeit EMV der erfindungsgemäßen Inverterstromquelle 1 zu erhöhen. Die Inverterstromquelle 1 umfasst ein Leistungsteil 4, weiche eine Netz-Gleichrichterschaltung 5, einen Zwischenkreis 6 und eine Wechselrichterschaltung 7 beinhaltet. Die Netz-Gleichrichterschaltung 5 ist zur Gleichrichtung der internen mehrphasigen Netz-Wechselspannung U1, V1, W1 zu einer Zwischenkreisspannung vorgesehen.

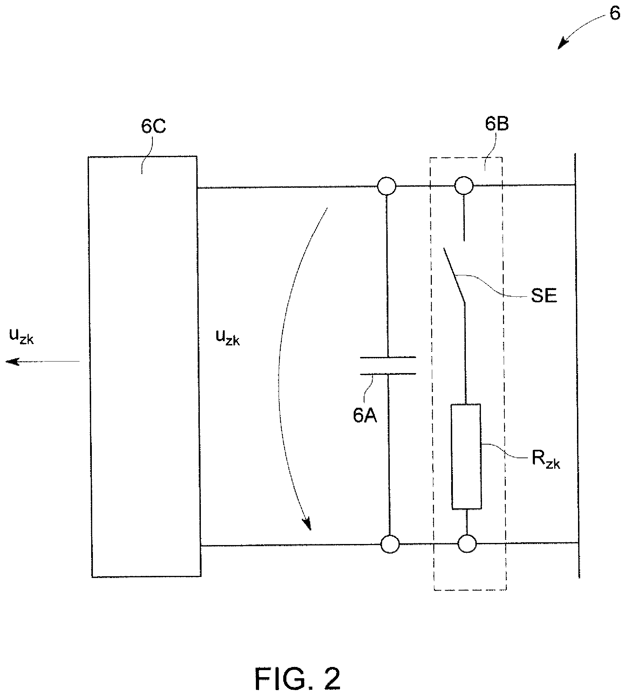

Der Zwischenkreis 6 weist mindestens einen Zwischenkreiskondensator 6A als Energiespeicher auf. Darüber hinaus weist der Zwischenkreis 6 der erfindungsgemäßen Inverterstromquelle 1 eine Begrenzungsschaltung 6B auf, welche eine an dem Zwischenkreiskondensator 6A auftretende Erhöhung der Zwischenkreisspannung U_{ZK} zur Reduzierung der in dem Zwischenkreis 6 gespeicherten Energie absenkt. Die an dem Zwischenkreiskondensator 6A anliegende Zwischenkreisspannung U_{ZK} wird vorzugsweise mittels einer Messschaltung 6C überwacht, die sensorisch die Zwischenkreisspannung U_{ZK} erfasst und an einen Controller einer Steuerung 11 der Inverterstromquelle 1 meldet. Eine mögliche Ausführungsform des Zwischenkreises 6 ist schematisch in Fig. 2 dargestellt.

Die gespeicherte Energie des Zwischenkondensators (6A) wird beim Auftreten von Ereignissen abgesenkt. Ein erstes Ereignis kann eine auftretende Erhöhung der Zwischenkreisspannung (U_{ZK}) sein. Ein weiteres Ereignis kann beim Ende eines Schweißvorganges eintreten. Ein weiteres Ereignis kann beim Ausschalten eines Handschalters eintreten.

Das Leistungsteil 4 der Inverterstromquelle 1 weist ferner eine Wechselrichterschaltung 7 auf, welche die Zwischenkreisspannung U_{ZK} in eine Ausgangswechseispannung für einen mit der Inverterstromquelle 1 verbundenen oder anschließbaren Schweißtransformator 8 liefert, wie in Fig. 1 dargestellt. Die von der Wechselrichterschaltung 7 gelieferte Ausgangswechselspannung kann vorzugsweise einphasig sein. Die Inverterstromquelle 1 besitzt ein Leistungsteil 4, welches bei dem in Fig. 1 dargestellten Ausführungsbeispiel eine einphasige Ausgangswechselspannung für den Schweißtransformator 8 eines Schweißgerätes SG liefert. Die von dem Leistungsteil 4 der Inverterstromquelle 1 abgegebene einphasige Ausgangswechselspannung wird primärseitig in den Schweißtransformator 8 eingespeist, weicher sekundärseitig über einen Gleichrichter 9 mit einer Schweißzange 10 des Schweißgerätes verbunden ist, wie in Fig. 1 erkennbar.

Die Inverterstromquelle 1 verfügt über eine Steuerung 11, die als Steuerteil über einen Regler 12 mit der Wechselrichterschaltung 7 verbunden ist, so wie in Fig. 1 dargestellt. Weiterhin verfügt die Inverterstromquelle 1 über ein Netzteil 13 zur Stromversorgung der Steuerung 11 und/oder des Reglers 12. Die Inverterstromquelle 1 verfügt ferner über einen schematisch dargestellten Kühlkörper 14.

Bei dem in Fig. 1 dargestellten Ausführungsbeispiel wird die Netz-Gleichrichterschaltung 5 durch eine halbgesteuerte -Brückengleichrichterschaltung gebildet. Dabei umfasst die Netz-Gleichrichterschaltung 5 steuerbare Thyristor-Diodenmodule THY, welche die an dem Netzanschluss 2 der Inverterstromquelle 1 anliegende mehrphasige Netz-Wechselspannung zur Erzeugung der Zwischenkreisspannung U_{ZK} gleichrichten. Bei dem in Fig. 1 dargestellten Ausführungsbeispiel umfasst die Netz-Gleichrichterschaltung 5 drei steuerbare Thyristor-Diodenmodule THY, zu denen jeweils zugehörige Dioden D in Reihe geschaltet sind. Zwischen dem Thyristor-Diodenmodul THY eines Brückenzweiges ist jeweils eine Phase der anliegenden mehrphasigen Netzspannung angeschlossen. Die verschiedenen Brückenzweige sind zueinander parallel verschaltet. Da die Thyristor-Diodenmodule THY den elektrischen Strom jeweils nur in eine Richtung führen können, ergibt sich ein Stromfluss. An diesem Stromfluss sind jeweils immer zwei Netzphasen und jeweils ein Thyristor-Diodenmodul THY der Halbbrücke beteiligt. Die Halbbrücke, in der die Thyristor-Diodenmodule THY stromführend ist, wird vom periodischen Spannungsverlauf in den einzelnen Netzphasen L bestimmt.

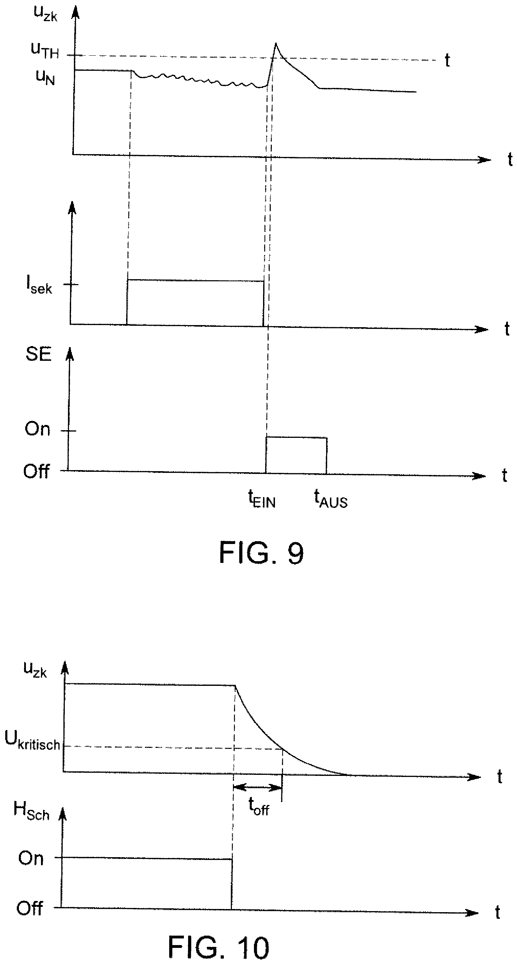

Der nachgeschaltete Zwischenkreis 6 dient als Energiespeicher und entkoppelt elektrisch den Eingangsstromrichterschaltkreis 5 von dem Ausgangsstromrichterschaltkreis 7. Für diesen Zweck verfügt der Zwischenkreis 6 über einen integrierten Zwischenkreiskondensator 6A, wie auch schematisch in Fig. 2 dargestellt. Wie in Fig. 2 erkennbar, verfügt der Zwischenkreis 6 über mindestens einen Zwischenkreiskondensator 6A und eine dazu parallel verschaltete Begrenzungsschaltung 6B. Die Begrenzungsschaltung 6B ist dazu vorgesehen, eine an dem Zwischenkreiskondensator 6A auftretende Erhöhung der Zwischenkreisspannung U_{ZK} zur Reduzierung der in dem Zwischenkreis 6 gespeicherten Energie abzusenken. Die Begrenzungsschaltung 6B ist bei dem in Fig. 2 dargestellten Ausführungsbeispiel parallel zu dem Zwischenkreiskondensator 6A verschaltet. Bei einer möglichen Ausführungsform senkt die Begrenzungsschaltung 6B am Ende eines Schweißvorganges die in den Zwischenkreis 6 fließende Energie ab. Die Kapazität C_{ZK} des Zwischenkreises 6 wird vorzugsweise durch einen Folienkondensator bereitgestellt. Da ein Folienkondensator im Vergleich zu einem Elektrolytkondensator über eine geringere Energiedichte verfügt, kann dies zu einem Spannungsanstieg an dem Zwischenkreis 6 bei einem erfolgten Lastabwurf, insbesondere an einem Schweißpunktende führen. Während eines Schweißvorganges fließt Energie von dem Stromversorgungsnetz SVN in die Inverterstromquelle 1. Am Ende des Schweißvorganges treibt die Induktivität den fließenden Strom von der Zuleitung weiter zu dem Inverter, weicher jedoch die hinzufließende Energie nicht mehr braucht bzw. ausgeben kann. Hierdurch fließt die Energie in den Zwischenkreiskondensator 6A und hebt die Spannung U_{ZK} an dem Zwischenkreiskondensator 6A über eine normale Zwischenkreisspannung an.Dieses Ereignis ist in Fig. 9 dargestellt. Dieser Anstieg der Zwischenkreisspannung U_{ZK} wird durch die parallel geschaltete Begrenzungsschaltung 6B des Zwischenkreises 6 begrenzt. Die Begrenzungsschaltung 6B des Zwischenkreises 6 weist bei einer möglichen Ausführungsform ein steuerbares Schaltelement SE und einen dazu seriell verschalteten Hochleistungswiderstand R_{ZK} auf, wie in Fig. 2 dargestellt. Das Schaltelement SE wird bei einer bevorzugten Ausführungsform durch ein Halbleiterschaltelement gebildet, beispielsweise durch einen MOSFET. Bei alternativen Ausführungsformen kann das Halbleiterschaltelement auch durch andere Halbleiterschaltelemente, beispielsweise IGBTs oder Bipolartransistoren, gebildet sein. Das Schaltelement SE der Begrenzungsschaltung 6B innerhalb des Zwischenkreises 6 wird durch die Steuerung 11 der Inverterstromquelle 1 angesteuert. Das Schaltelement SE der Begrenzungsschaltung 6B wird durch die Steuerung 11 der Inverterstromquelle 1 zeitweise eingeschaltet, sodass sich der Zwischenkreiskondensator 6A über den Hochleistungswiderstand R_{ZK} der Begrenzungsschaltung 6B zur Absenkung der über einen Schwellenwert U_{TH} angestiegenen Zwischenkreisspannung U_{ZK} teilweise entlädt, wie in Fig. 9 dargestellt. Der Hochleistungswiderstand R_{ZK} der Begrenzungsschaltung 6B wandelt die überschüssige Energie in Wärme um. Der Hochleistungswiderstand R_{ZK} dient zum schnellen Entladen des Zwischenkreises 6 und weist dabei vorzugsweise eine relativ hohe Dauerleistung von wenigstens 100 W auf. Bei einer möglichen Ausführungsform handelt es sich bei dem Hochleistungswiderstand R_{ZK} der Begrenzungsschaltung 6B um einen Dickschichtwiderstand. Der Hochleistungswiderstand R_{ZK} der Begrenzungsschaltung 6B wird vorzugsweise durch den Kühlkörper 14 der Inverterstromquelle 1 gekühlt. Die Steuerung 11 verfügt bei einer möglichen Ausführungsform über einen Mikroprozessor bzw. Prozessor zur Ansteuerung des Schaltelementes SE der Begrenzungsschaltung 6B.

Weiterhin kann das Schaltelement SE bei einer möglichen Ausführungsvariante über eine Hardware-Schutzschaltung angesteuert werden. Beispielsweise kann durch Betätigung eines Handschalters das Schaltelement SE der Begrenzungsschaltung 6B geschlossen werden, um den Zwischenkreiskondensator 6A zu entladen. Dieses Ereignis ist in Fig. 10 dargestellt.

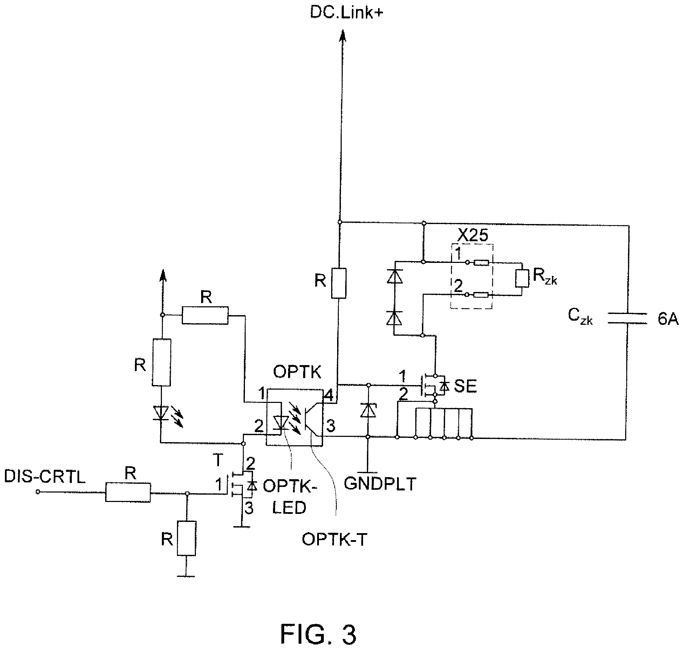

Parallel dazu wird das Schaltelement SE bei einer bevorzugten Ausführungsform durch die Steuerung 11 der Inverterstromquelle 1 angesteuert werden, wobei das Schaltelement SE vorzugsweise zeitweise eingeschaltet wird, um den Zwischenkreiskondensator 6A, insbesondere den Folienkondensator, über den Hochleistungswiderstand R_{ZK} der Begrenzungsschaltung 6B zur Absenkung bzw. Reduzierung der Zwischenkreisspannung U_{ZK} teilweise zu entladen, wie in Fig. 9 dargestellt. Die Begrenzungsschaltung 6B des Zwischenkreises 6 und die Steuerung 11 der Inverterstromquelle 1 werden vorzugsweise galvanisch voneinander getrennt, beispielsweise mittels eines Optokopplers Optk, wie in Fig. 3 dargestellt. Bei einer möglichen Ausführungsform schaltet die Steuerung 11 der Inverterstromquelle 1 beim Ausschalten der Inverterstromquelle 1 das Schaltelement SE der Begrenzungsschaltung 6B ein, sodass sich der Zwischenkreiskondensator 6A über den Hochleistungswiderstand R_{ZK} innerhalb eines vorgegebenen Entladezeitraumes t_{off} entlädt. Hierbei ist es nicht erforderlich, dass sich der Zwischenkreiskondensator 6A vollständig entlädt, es reicht vielmehr eine Entladung dahingehend, dass die Zwischenkreisspannung U_{ZK} unter eine zulässige kritische Berührungsspannung Uₖᵣᵢₜ von beispielsweise 60 V abfällt, wie in Fig. 10 dargestellt.

Der Hochleistungswiderstand R_{ZK} der Begrenzungsschaltung 6B des Zwischenstromkreises 6 wird vorzugsweise durch den anliegenden Kühlkörper 14 der Inverterstromquelle 1 gekühlt, wobei der Kühlkörper 14 mit einer Montageplatte 16 der Inverterstromquelle 1 verbunden ist, die beispielsweise zur Montage der Inverterstromquelle 1 an ein Schaltschrankgehäuse eines Schaltschrankes vorgesehen sein kann. Bei dem in Fig. 1 dargestellten Ausführungsbeispiel weist die Wechselrichterschaltung 7, welche die Zwischenkreisspannung U_{ZK} in eine Ausgangswechselspannung umwandelt, vier in einer Vollbrücke verschaltete IGBT-Module auf. Die Wechselrichterschaltung 7 liefert bei einer möglichen Ausführungsform eine einphasige Wechselspannung. Diese einphasige Wechselspannung bildet beispielsweise eine mittelfrequente Wechselspannung, die an den Schweißtransformator 8 des Schweißgerätes primärseitig eingespeist wird. Die IGBT-Module der Wechselrichterschaltung 7 sind zu einer Vollbrücke verschaltet, wobei die Vollbrücke die DC-Zwischenkreisspannung in eine AC-Spannung für den Schweißtransformator 8 umwandelt. Die in dem Schweißtransformator 8 primärseitig eingespeiste Ausgangswechselspannung wird sekundärseitig über den Gleichrichter 9 an eine Schweißzange 10 des Schweißgerätes SG abgegeben.

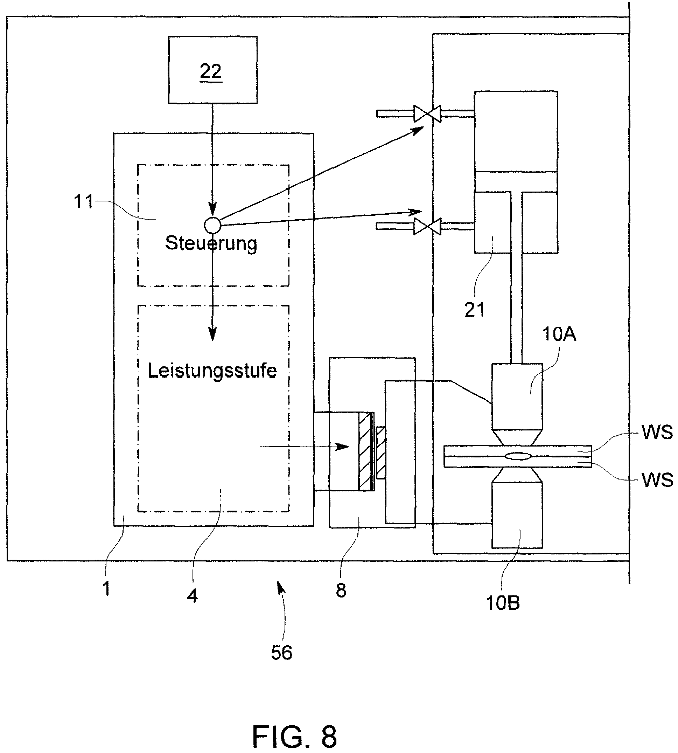

Bei dem Schweißgerät SG handelt es sich beispielsweise um ein Widerstandspunktschweißgerät wie in Fig. 8 dargestellt. Das Widerstandspunktschweißen ist ein Widerstandspressschweißverfahren zum Verschweißen von meist blechförmigen Metallteilen unterschiedlichster Abmessungen und Materialien. Ein Vorteil des Widerstandspunktschweißens gegenüber Schmelzschweißen besteht in einer guten Energieeffizienz und einem geringen Bauteilverzug sowie in der Automatisierbarkeit. Ein weiterer Vorteil des Widerstandspunktschweißens besteht darin, dass kein Zusatzmaterial erforderlich ist.

An dem Schweißtransformator 8 kann bei einer möglichen Ausführungsform Sensoren zur Temperaturüberwachung vorgesehen sein, die Sensorsignale an die Steuerung 11 der Inverterstromquelle 1 liefern. Weiterhin kann der Gleichrichter 9 einen Sekundärspannungsabgriff aufweisen, der das Spannungssignal an die Steuerung 11 der Inverterstromquelle 1 liefert. Eine parallel zu dem Mittenabgriff vorgesehene Spule liefert bei einer möglichen Ausführungsform ein Signal für eine konstante Stromregelung. Der von der Gleichrichterschaltung 9 abgegebene Schweißstrom weist eine hohe Stromamplitude bei gleichzeitig relativ geringer Spannung auf.

Die erfindungsgemäße Inverterstromquelle 1 verfügt über einen Zwischenkreis 6 mit Begrenzungsschaltung 6B, die einen übermäßigen Spannungsanstieg im Zwischenkreis 6 verhindert. Darüber hinaus kann die Begrenzungsschaltung 6B auch zum Entladen des Zwischenkreises 6 verwendet werden. Hierdurch ergeben sich vordefinierte kurze Entladezeiten. Während bei herkömmlichen Inverterstromquellen nach dem Ausschalten der Inverterstromquelle über einen relativ langen Zeitraum von mindestens fünf Minuten gewartet werden muss, bevor man mit einem Service, beispielsweise einem Wartungs- oder Reparaturservice, beginnen kann, kann mithilfe der Begrenzungsschaltung 6B eine Entladung des Zwischenkreiskondensators 6A innerhalb einer sehr geringen Entladezeit von beispielsweise weniger als sechs Sekunden eine ausreichende Entladung des Zwischenkreiskondensators 6A erreicht werden, sodass die verbleibende Zwischenkreisspannung U_{ZK} unterhalb einer zulässigen Berührungsspannung abfällt. Nach erfolgter Entladung kann ein Nutzer bzw. Techniker Wartungs- bzw. Reparaturmaßnahmen bzw. Montagevorgänge gefahrlos durchführen. Diese schnelle Entladung des Zwischenkreiskondensators 6A mithilfe der Begrenzungsschaltung 6B erlaubt es zudem, bei einer möglichen Ausführungsform auf ein Gehäuse der Inverterstromquelle 1 zu verzichten, da alle spannungsführenden Teile keine für eine Berührung durch den Techniker gefährliche Spannungshöhe mehr aufweisen. Der Verzicht auf ein Gehäuse führt zu einer erheblichen Gewichtsreduktion. Weiterhin kann durch das Weglassen des Gehäuses ein einzelner Servicetechniker notwendige Wartungs- bzw. Reparaturmaßnahmen schneller durchführen. Die Komponenten bzw. Bauteile der Inverterstromquelle 1 können ausgetauscht werden, ohne dass ein Servicetechniker zuvor ein Gehäuse der Inverterstromquelle 1 öffnen muss. Die Entladezeit kann in Abhängigkeit von der Kapazität C_{ZK} des Zwischenkreiskondensators 6A durch Konfiguration des Widerstandswertes des Hochleistungswiderstandes R_{ZK} eingestellt bzw. gewählt werden. Bei einer möglichen Ausführungsform entspricht die Entladezeit t_{off} dem minimalen Zeitraum, den ein Servicetechniker nach dem Ausschalten der Inverterstromquelle 1 benötigt, um bis zu der Inverterstromquelle 1 zu gelangen. Hierdurch ist sichergestellt, dass ein Servicetechniker nie mit einer kritischen Spannung an der Inverterstromquelle 1 in Berührung kommt. Der Hochleistungswiderstand R_{ZK} der Begrenzungsschaltung 6B ist im normalen Betrieb der Inverterstromquelle 1 zur Begrenzung der Zwischenkreisspannung ausgelegt. Er wird bei Ausschalten der Inverterstromquelle 1 dazu verwendet, den Zwischenkreiskondensator 6A soweit zu entladen, dass nach Unterschreiten einer kritischen Spannung Uₖᵣᵢₜ eine Berührung der Inverterstromquelle 1 durch einen Servicetechniker gefahrlos möglich wird. Während des normalen Betriebes der Inverterstromquelle 1 ist der Hochleistungswiderstand R_{ZK} einer Pulsbelastung ausgesetzt. Dabei fließt über den Hochleistungswiderstand R_{ZK} ein Chopperstrom zur Absenkung der Zwischenkreisspannung U_{ZK}. Die Ansteuerung der Begrenzungsschaltung 6B, insbesondere dessen Schaltelementes SE, erfolgt vorzugsweise durch die Signalelektronik der Steuerung 11.

Nach Einschalten der Schweißstromquelle bzw. Inverterstromquelle 1 zur Durchführung eines Schweißvorganges erfolgt somit während des Schweißbetriebes bei jedem Lastabwurf (Iₛₑₖ wird null), der zu einer Überschreitung eines Spannungsschwellenwertes U_{TH} führt zeitweises Einschalten des ansteuerbaren Schaltelementes SE der Begrenzungsschaltung 6B. Dieses Ereignis ist in Fig. 9 dargestellt. Möchte ein Nutzer den Schweißvorgang ganz beenden und schaltet beispielsweise mittels eines manuell betätigbaren Hauptschalters HS einer Nutzerschnittstelle der Inverterstromquelle 1 diese zur vollständigen Beendigung des Schweißvorganges aus, kann das Schaltelement SE der Begrenzungsschaltung 6B bei einer möglichen Ausführungsform derart geschaltet werden, dass es den Zwischenkreiskondensator 6A innerhalb der konfigurierten Entladezeit t_{off} so weit entlädt, dass ein Servicetechniker gefahrlos Maßnahmen an der ausgeschalteten Inverterstromquelle 1 vornehmen kann, wie in Fig. 10 dargestellt. Nach Abschluss der Maßnahmen kann der Servicetechniker die Inverterstromquelle 1 wieder manuell einschalten, wobei das Schaltelement SE der Begrenzungsschaltung 6B wieder kontinuierlich zur Steuerung zyklisch ein- und ausgeschaltet wird, falls ein Lastabwurf erkannt wird. Durch das zyklische Ein- und Ausschalten des Schaltelementes SE nach jedem erkanntem Lastabwurf wird die erhöhte Zwischenkreisspannung U_{ZK} auf die normale Betriebsspannung U_{N} abgesenkt.

Die Steuerung 11 der Inverterstromquelle 1 steuert die Netz-Gleichrichterschaltung 5, die Begrenzungsschaltung 6B des Zwischenkreises 6 sowie die Wechselrichterschaltung 7. Bei einer möglichen Ausführungsform erfolgt die Ansteuerung der Netz-Gleichrichterschaltung 5 und/oder der Wechselrichterschaltung 7 in Abhängigkeit eines gemessenen Ausgangsstromes bzw. Schweißstromes. Die Netz-Gleichrichterschaltung 5 kann durch die Steuerung 11 angesteuert werden, indem die Steuerung 11 alle drei Stromversorgungsphasen L misst und dann im Betrieb jedes Thyristormodul THY einzeln im richtigen Bereich ansteuert. Vorzugsweise ist der Leistungspfad und der Steuerpfad voneinander galvanisch getrennt. Hierdurch kann erreicht werden, dass die Schaltflanken der IGBT-Module des Leistungspfades den Steuerpfad möglichst wenig beeinflussen. Eine galvanische Trennung kann beispielsweise mithilfe eines Optokopplers erreicht werden, wie auch in dem Implementierungsbeispiel gemäß Fig. 3 dargestellt.

Bei dem in Fig. 3 dargestellten Ausführungsbeispiel befindet sich der Zwischenkreis 6 zwischen DCLink+ und GNDPLT. Der Hochleistungswiderstand R_{ZK} des Zwischenkreises 6 ist zwischen X25 Pin1 und Pin2 angeschlossen. Über seriell verschaltete Widerstände R wird der Choppertransistor bzw. das Schaltelement SE eingeschaltet. Solange die lichtemittierende Diode LED-Optk des Optokopplers (Optk) leuchtet, wird das Gate des Schaltelementes SE nicht eingeschaltet. Der Controller der Steuerung 11 vergleicht die von der Messschaltung 6C gemessene Zwischenkreisspannung U_{ZK} mit einem eingestellten Grenzwert U_{TH}. Sobald der Messwert über dem Grenzwert U_{TH} liegt, wird das Dischargeer-Steuersignal (DIS-CRTL) des Kontrollers der Steuerung 11 der Inverterstromquelle 1 ausgeschaltet, so dass der Transistor T1, welcher in Serie zu der lichtemittierenden Diode LED-Optk des Optokopplers Optk verschaltet ist, hochohmig wird. Dadurch hört die LED des Optokopplers auf zu leuchten, sodass der Fototransistor Optk-T des Optokopplers hochohmig wird. Dies führt zu einem Spannungsanstieg am Gate des Schaltelementes SE, sodass das Schaltelement SE eingeschaltet wird und der Strom über den Hochleistungswiderstand R_{ZK} abfließt, welcher an den X25 Pin1 und Pin2 angeschlossen ist. Der Hochleistungswiderstand R_{ZK} bzw. Chopperwiderstand R_{ZK} verhindert somit eine Überspannung an dem Zwischenkreis 6 infolge eines Lastabwurfes am Ende eines Schweißvorganges. Wird ein bestimmter Spannungspegel an dem Zwischenkreis 6 überschritten, wird dies durch die Messschaltung 6C an den Controller der Steuerung 11 gemeldet. Ein Komparator, welcher die Zwischenkreisspannung U_{ZK} mit einem Schwellenwert U_{TH} vergleicht, befindet sich entweder in der Messschaltung 6C oder dem Controller der Steuerung 11. Der Controller schaltet bei Überschreitung des Schwellenwertes U_{TH} das Discharge-Steuersignal DIS-CRTL logisch aus, um den Transistor T1 zu sperren, sodass die LED des Optokopplers Optk nicht mehr leuchtet und somit das Schaltelement SE zur Entladung des Zwischenkreises 6 zeitweise eingeschaltet wird, bis ein normaler Spannungspegel U_{N} erreicht wird (wie in Fig. 9 dargestellt).

Ein Ausschalten des Hauptschalters HS führt zum Ausschalten des Netzteils 13 der Inverterstromquelle 1 und somit zu einem Absenken der Versorgungsspannung von 3,3 V für die Leuchtdiode LED des Optokopplers Optk des in Fig. 3 gezeigten Schaltkreises. Wird somit der Hauptschalter HS der Inverterstromquelle 1 betätigt, um die Inverterstromquelle 1 auszuschalten, hört die LED auf zu leuchten, sodass das Schaltelement SE eingeschaltet wird und die Zwischenkreiskondensatoren 6A entlädt. Dieses Ereignis ist in Fig. 10 dargestellt.

Die in Fig. 3 dargestellte Schaltung ist fail-safe ausgebildet. Während des normalen Schweißbetriebs wird die Leuchtdiode Optk-LED des Optokopplers Optk am Leuchten gehalten, sodass das Schaltelement SE sperrt. Nur bei Ausschalten der Inverterstromquelle mittels eines Hauptschalters HS oder bei detektierter elektrischer Überspannung wird die Leuchtdiode Optk-LED ausgeschaltet. Kommt es aufgrund von Hardwarefehlern zu einer Unterbrechung der Stromversorgung der Leuchtdiode Optk-LED, wird das Schaltelement SE automatisch eingeschaltet, sodass sich der Zwischenkreis 6 entlädt und einen betriebssicheren Zustand einnimmt. Der Ausschaltzeitpunkt tₐᵤₛ des Schaltelements SE muss nicht über einen bestimmten Zeitraum vorgegeben werden, sondern kann bei einer möglichen Ausführungsform auch über einen zweiten Spannungspegel definiert werden. Der Controller der Steuerung 11 hält das Discharge-Steuersignal DIS-CRTL solange logisch hoch bis entweder eine gewisse Zeit vergangen ist oder ein gewisser Spannungspegel am Zwischenkreis 6 erreicht ist.

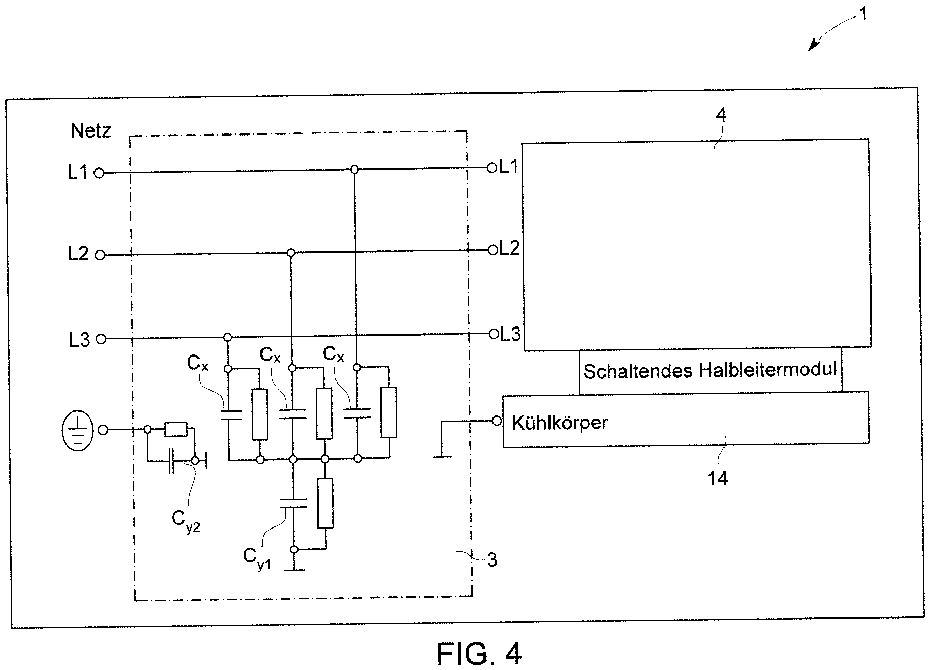

Ein Überhitzen des Hochleistungswiderstandes R_{ZK} kann mithilfe eines Zählers verhindert werden. Dieser Zähler lässt in einem gewissen Zeitraum nur eine bestimmte Anzahl von Schaltvorgängen des Schaltelementes SE der Begrenzungsschaltung 6B zu. Weiterhin wird ein Überhitzen des Hochleistungswiderstandes R_{ZK} vorzugsweise zusätzlich mithilfe einer effizienten Kühlung bzw. mithilfe des Kühlkörpers 14 der Inverterstromquelle 1 verhindert. Fig. 4 verdeutlicht die Funktionsweise des an der Inverterstromquelle 1 eingangsseitig vorgesehenen Netzfilters 3. Das Netzfilter 3 erhöht die EMV-Verträglichkeit der inverterstromquelle 1. Das Netzfilter 3 umfasst Kondensatoren Cₓ, Cy1, Cy2, wie in Fig. 1 und 4 erkennbar. Die Kapazitäten der Kondensatoren Cₓ des Netzfilters 3, welche zwischen den Stromversorgungsphasen L des Stromversorgungsnetzes SVN verschalten sind, weisen vorzugsweise einstellige Mikrofarad-Kapazitätswerte auf. Bei einer möglichen Ausführungsform weisen die Kondensatoren Cₓ eine Kapazität von 3,3 µF auf. Die zu den Kondensatoren Cₓ parallel verschalteten Widerstände R besitzen vorzugsweise dreistellige Kiloohmwerte, um die Cₓ-Kondensatoren in den entsprechenden Zeiten zu entladen. Der Kondensator Cy1, der zwischen dem Netzfiltermittelpunkt und einer Montageplatte 16 der Inverterstromquelle 1 liegt, kann von einem einstelligen Nanofarad- bis hin zu einem dreistelligen Mikrofarad-Kapazitätswert aufweisen, je nachdem, wie stark die zu erwartenden Störungen sind. Je größer die Kapazität dieses Kondensators ist, umso mehr elektromagnetische Störungen fließen über den Kondensator zurück in die Phasen des Stromversorgungsnetzes SVN und verbessern auf diese Weise die elektromagnetische Verträglichkeit (EMV) der Inverterstromquelle 1.

Eine Erhöhung der Zwischenkreisspannung U_{ZK} kann durch einen Lastabwurf an einem Schweißpunktende hervorgerufen werden. Es können aber auch andere Einflüsse zu einer ungewollten Erhöhung der Zwischenkreisspannung über den Schwellenwert U_{TH} führen, beispielsweise das Stoppen eines Generators, der an demselben lokalen Netz angeschlossen ist.

Die Kapazität des Kondensators Cy2, welcher zwischen der Montageplatte 16 der Inverterstromquelle 1 in einem Schaltschrank vorgesehen sein kann, liegt vorzugsweise in einem ein- bis dreistelligen Nanofarad-Bereich. Hierdurch ist gewährleistet, dass möglichst geringe Erdströme über den Erdleiter fließen, aber dennoch ausreichend groß sind, um die EMV-Verträglichkeit zu erhöhen. Parallel zu dem Kondensator Cy2 kann ein Widerstand im Megaohm-Bereich verschaltet sein. Das Gleiche gilt für den Kondensator Cy1 des Netzfilters 3. Die Inverterstromquelle 1 kann auf eine Montageplatte 16 geschraubt sein. Diese Montageplatte 16 wird vorzugsweise über Isolierhülsen vom Schaltschrank getrennt. Hierdurch wird eine Trennung vom Schaltschrankgehäuse, das auf Erdpotential liegt, und der Montageplatte 16 gewährleistet. Bei der erfindungsgemäßen Inverterstromquelle 1 sind somit die Montageplatte 16 und die damit verbundenen Komponenten, beispielsweise der Kühlkörper 14, somit nicht direkt mit Erde verbunden, sondern werden vorzugsweise über ein RC-Glied des Netzfilters 3 auf das Referenzpotential bezogen. Hierdurch können sich die von den Modulen eingekoppelten Störungen besser schließen. Wie in Fig. 4 schematisch angedeutet, schließt sich ein Großteil des Störpfades über das Netzfilter 3, sodass die EMV-Verträglichkeit gesteigert wird.

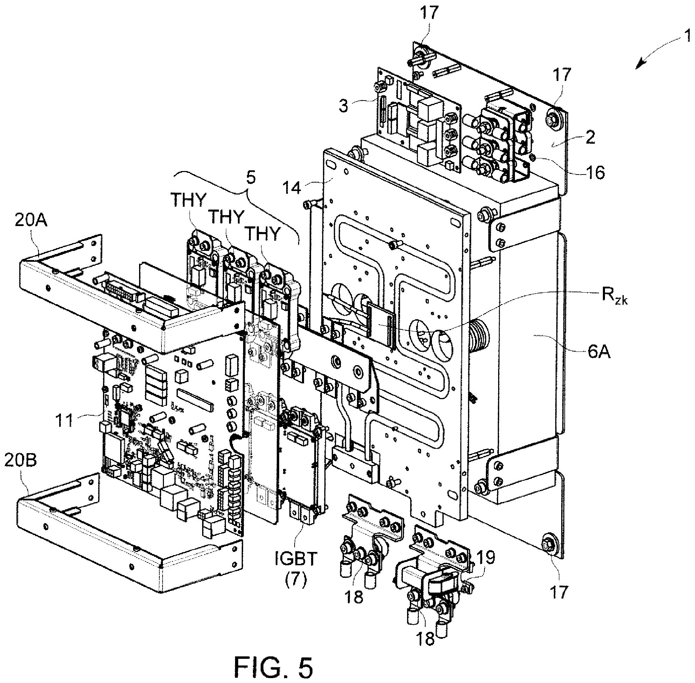

Fig. 5 zeigt eine perspektivische Explosionsdarstellung einer möglichen Ausführungsform der erfindungsgemäßen inverterstromquelle 1. Die Inverterstromquelle 1 eignet sich beispielsweise zur Montage innerhalb eines Schaltschrankes. Die Inverterstromquelle 1 verfügt über eine Montageplatte 16. Die Montageplatte 16 dient zur Befestigung aller Komponenten im Schaltschrank. Die Montageplatte 16 ist aus EMV-Gründen auf primär bezogen. Die Isolierhülsen 17 trennen die Montageplatte 16 von dem geerdeten Schaltschrankgehäuse. Die Inverterstromquelle 1 verfügt über einen Zwischenkreiskondensatorblock 6A und einen darin integrierten Folienkondensator. Dieser Folienkondensator stellt den Energiespeicher der Inverterstromquelle 1 dar. Fig. 5 zeigt den Netzanschlussblock 2 der Inverterstromquelle 1, die ein Anschlussfeld für drei Stromversorgungsphasen L bildet. Der Netzanschlussblock 2 ist auf der Oberseite des Zwischenkreiskondensatorblockes 6A montiert, wie in Fig. 5 dargestellt. Weiterhin ist das Netzfilter 3 ebenfalls auf der Oberseite des Zwischenkreiskondensatorblockes 6A angebracht. Der Netzfilter 3 dient zur Einhaltung der EMV-Richtlinien. Der Zwischenkreis 6 der erfindungsgemäßen Inverterstromquelle 1 verfügt über eine Begrenzungsschaltung 6B mit einem Hochleistungswiderstand R_{ZK}, der in Fig. 5 dargestellt ist. Der Hochleistungswiderstand R_{ZK} ist bei dem dargestellten Ausführungsbeispiel auf einem Kühlkörper 14 angebracht. Bei dem in Fig. 5 dargestellten Ausführungsbeispiel wird der Kühlkörper 14 durch einen Wasserkühlkörper zur Kühlung der Komponenten der Inverterstromquelle 1 gebildet. Wie in Fig. 5 erkennbar, ist der Kühlkörper 14 mechanisch an den Zwischenkreiskondensatorblock 6A des Zwischenkreises 6 angebracht. Die Explosionsdarstellung gemäß Fig. 5 zeigt ferner Thyristor-Diodenmodule THY der Netz-Gleichrichterschaltung 5 sowie IGBT-Module der Wechselrichterschaltung 7. Die Thyristor-Diodenmodule THY der Netz-Gleichrichterschaltung 5 dienen zum Gleichrichten der AC-Netzspannung in die DC-Zwischenkreisspannung des Zwischenkreises 6. Die IGBT-Module sind zu einer Vollbrücke verschaltet, welche die DC-Zwischenkreisspannung in eine AC-Ausgangsspannung umwandeln. Die Explosionsdarstellung gemäß Fig. 5 zeigt einen Inverterausgang 18 zum Anschluss an einen Schweißtransformator 8. Am Inverterausgang 18 kann ein Stromwandler zur Messung des Ausgangsstromes vorgesehen sein, wie in Fig. 5 dargestellt. Der gemessene Ausgangsstrom kann der Steuerung 11 der Inverterstromquelle 1 zur Auswertung zugeführt werden. Das Steuerteil 11 kann auf einer Steuerplatine vorgesehen sein, wie in Fig. 5 dargestellt. Weiterhin verfügt die Inverterstromquelle 1 über Handgriffe 20A, 20B zur Handhabe der Inverterstromquelle 1. Wie man aus Fig. 5 erkennen kann, ist die Inverterstromquelle 1 gehäuselos ausgebildet und wird in dieser Form mithilfe der Montageplatte 16 über die Isolierhülsen 17 in das Schaltschrankgehäuse des Schaltschrankes montiert. Zur Durchführung einer Servicetätigkeit kann somit ein Servicetechniker ohne Öffnen eines Gehäuses direkt Wartungs- bzw. Reparaturmaßnahmen an der betreffenden Inverterstromquelle 1 vornehmen. Hierdurch wird der Service- bzw. Wartungsvorgang erheblich erleichtert. Zum Schutz des Servicetechnikers wird die Zwischenkreisspannung U_{ZK} mithilfe der Begrenzungsschaltung 6B zum Ausschalten der Inverterstromquelle 1 innerhalb einer Entladezeit entladen. Beispielsweise wird innerhalb einer Entladezeit von fünf Sekunden ein Absenken der Spannung auf eine zulässige Berührungsspannung von beispielsweise 60 V erreicht.

Bei einer möglichen Ausführungsform verbindet eine Sammelschiene bzw. Busbar niederinduktiv die Halbleiterschaltelemente mit dem Zwischenkreiskondensator 6A. Die reduzierte Induktivität vermindert auch Spannungsüberschwinger der Schaltelemente SE beim Ausschalten. Dies wiederum reduziert mögliche Schaltverluste.

Die Kapazität C_{ZK} des Zwischenkreiskondensators 6A, welcher vorzugsweise durch einen Folienkondensator gebildet wird, liegt bei einer möglichen Ausführungsform in einem Kapazitätsbereich von 1 mF bis 15 mF. Bei einer möglichen Ausführungsform weist der Zwischenkreiskondensator 6A eine Kapazität von 5 mF +/- 10 % auf. Das Dielektrikum des Zwischenkreiskondensators 6A weist bei einer möglichen Ausführungsform metallisiertes Polypropylen auf, wobei der Zwischenkreiskondensator 6A vorzugsweise selbstheilend ausgebildet ist.

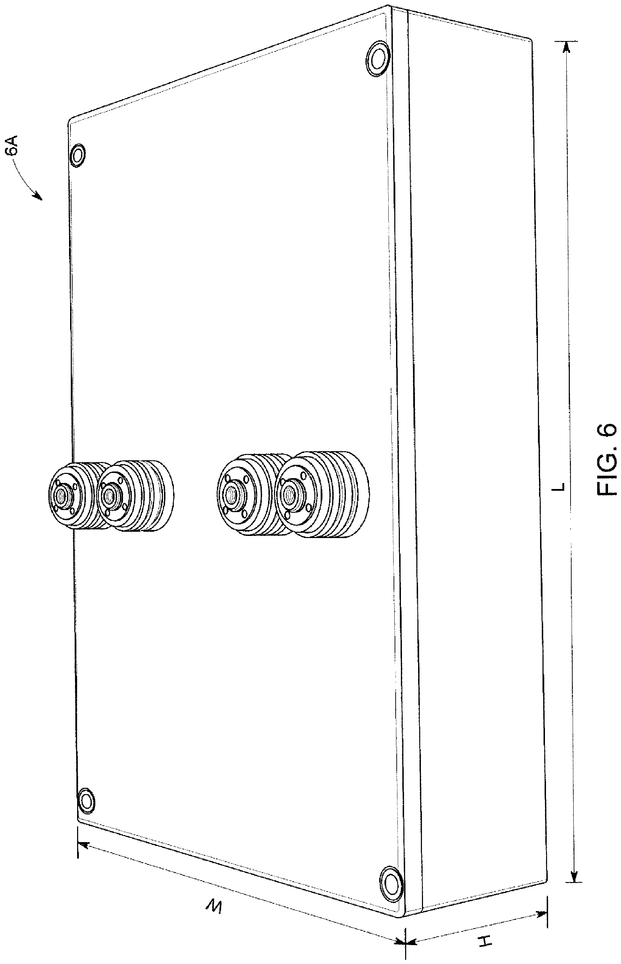

Fig. 6 zeigt eine mögliche Dimensionierung des Zwischenkreiskondensatorblockes 6A des Zwischenkreises 6. Bei einer möglichen Implementierungsvariante beträgt die Höhe H des Zwischenkreisblockes 6A 100 mm, die Länge L des Zwischenkreisblockes 425 mm und die Breite W des Zwischenkreisblockes 283 mm. Die Betriebstemperatur des Zwischenkreiskondensators kann bei einer möglichen Ausführungsvariante in einem Bereich von -25°C bis +105°C liegen. Das Gewicht des Zwischenkreiskondensatorblockes 6A liegt beispielsweise bei etwa 15 kg. Das Leistungsteil 4 weist insgesamt ein geringes Gewicht auf. Weiterhin ist der Zwischenkreiskondensatorblock 6A, dessen Kapazität C_{ZK} durch mindestens einen Folienkondensator gebildet wird, gegenüber mechanischen Schockeinwirkungen und Vibrationen äußerst unempfindlich. Die Betriebslebensdauer des Zwischenkreiskondensatorblockes 6A ist demzufolge sehr hoch und liegt bei mindestens 100.000 Stunden. Der Zwischenkreiskondensatorblock 6A ist vorzugsweise korrosionsgeschützt. Die Betriebsspannung des Zwischenkreiskondensators 6A liegt über 500 V, beispielsweise bei einer Spannung Uₙ = 900 V. Die in dem Zwischenkreiskondensatorblock 6A speicherbare Energie Eₙ liegt beispielsweise bei 2.000 Ws. Die maximal zulässige Spannung liegt bei einer möglichen Ausführungsvariante beispielsweise bei etwa 990 V. Für kurze Zeiträume kann die zulässige Spannung bei höheren Werten liegen, beispielsweise etwa 1.200 V für eine Überspannung, die weniger als 1 Minute dauert. Der Zwischenkreiskondensator 6A ist vorzugsweise selbstheilend ausgebildet und kann sich selbständig regenerieren bei Durchbrüchen seines Dielektrikums. Bei einer möglichen Ausführungsvariante weist der Zwischenkreiskondensator Polypropylen auf, das bis zu 50 % seines Eigengewichts ausmacht. Demzufolge ist die in dem Zwischenkreiskondensator 6A speicherbare Energie relativ hoch. Bei einer möglichen Ausführungsvariante kann der Zwischenkreiskondensator 6A mit einem Drucksensor versehen sein, der den internen Druck überwacht.

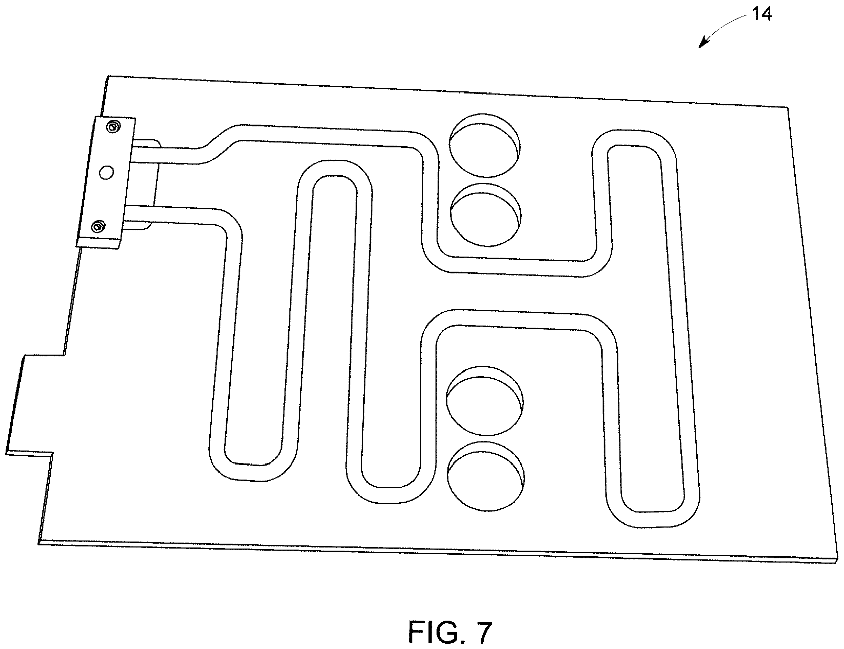

Fig. 7 zeigt ein Ausführungsbeispiel für einen in der Inverterstromquelle 1 verwendeten Kühlkörper 14. Bei dem dargestellten Ausführungsbeispiel wird der Kühlkörper 14 durch eine Wasserkühlplatte gebildet. Wie in Fig. 7 erkennbar, fließt kühlendes Wasser mäanderförmig durch die Wasserkühlplatte 14. Bei einer alternativen Ausführungsform kann die Kühlung auch mithilfe von Luftkühlung erfolgen. Die in Fig. 7 dargestellte Wasserkühlplatte 14 dient zur Kühlung des Hochleistungswiderstandes R_{ZK} des Zwischenkreises 6. Die Wasserkühlplatte 14 ist vorzugsweise senkrecht an den Zwischenkreiskondensatorblock 6A montiert, wie in Fig. 5 dargestellt. Die in Fig. 5 dargestellte Inverterstromquelle 1 ist gehäuselos ausgebildet, um einerseits Gewicht einzusparen und andererseits Montage- und/oder Servicetätigkeiten zu erleichtern. Bei einer alternativen Ausführungsform kann die Inverterstromquelle 1 zusätzlich mit einem Gehäuse umgeben werden, um äußere Einflüsse zu minimieren. Die in Fig. 5 dargestellte Inverterstromquelle 1 kann auch in ein tragbares Gehäuse integriert werden. Vorzugsweise wird die in Fig. 5 dargestellte gehäuselose Inverterstromquelle 1 in ein verschließbares Schaltschrankgehäuse montiert. Die in Fig. 5 dargestellte Inverterstromquelle 1 eignet sich für ein Schweißgerät, insbesondere für ein Widerstandspunktschweißgerät. Die Inverterstromquelle 1 kann über eine (nicht dargestellte) Nutzerschnittstelle verfügen. Diese Nutzerschnittstelle kann mit der Steuerung 11 verbunden sein und ein Anzeigeelement aufweisen, welches die Entladung des Zwischenkreiskondensatorblockes 6A des Zwischenkreises 6 anzeigt. Die Entladung des Zwischenkreiskondensatorblockes 6A des Zwischenkreises 6 wird bei einer möglichen Ausführungsform mittels Sensoren detektiert und der Steuerung 11 der Inverterstromquelle 1 gemeldet. Sobald der Zwischenkreiskondensatorblock 6A ausreichend entladen ist, wird dies optisch mithilfe des Anzeigeelementes angezeigt, sodass ein Servicetechniker mit der Servicetätigkeit gefahrlos beginnen kann.

Weitere Ausführungsvarianten der erfindungsgemäßen Inverterstromquelle 1 sind möglich. Beispielsweise ist der Widerstand des Hochieistungswiderstandes R_{ZK} bei einer möglichen Ausführungsvariante einstellbar bzw. konfigurierbar. Die Konfiguration kann bei einer möglichen Ausführungsvariante auch durch Umschalten zwischen verschiedenen Hochleistungswiderständen R_{ZK} mit unterschiedlichen Widerstandswerten erfolgen. Bei einer möglichen Ausführungsvariante erfolgt die Einstellung der Widerstandshöhe des Hochieistungswiderstandes R_{ZK} über die Nutzerschnittstelle oder eine entfernte zentrale Steuerung. Durch Konfiguration der Widerstandshöhe des Hochleistungswiderstandes R_{ZK} kann die Entladezeit an den Anwendungsfall angepasst werden. Die erfindungsgemäße Inverterstromquelle 1 zeichnet sich durch hohe EMV-Verträglichkeit aus, da die Montageplatte 16 nicht mit Erdpotential verbunden wird, sondern über ein RC-Glied des Netzfilters 3 auf Referenzpotential bezogen wird. Hierdurch können sich die von den Modulen eingekoppelten Störungen besser schließen. Die Verwendung eines Folienkondensators vermeidet die durch die Symmetrisierungswiderstände sich ergebenden Leistungsverluste. Darüber hinaus kann aus den Folienkondensatoren keine Elektrolytflüssigkeit entweichen. Die erfindungsgemäße Inverterstromquelle 1 kann somit auch relativ hohen Beschleunigungskräften ausgesetzt werden. Beispielsweise kann die Inverterstromquelle 1 auch auf einen Roboterarm eines Roboters angebracht werden, da sie gegenüber Beschleunigungskräften besonders robust ausgebildet ist. Die erfindungsgemäße Inverterstromquelle 1 zeichnet sich zudem durch eine besonders hohe Betriebslebensdauer aus. Ein weiterer Vorteil der erfindungsgemäßen Inverterstromquelle 1 liegt in ihrer besonderen Wartungsfreundlichkeit. Zudem kann die erfindungsgemäße Inverterstromquelle 1 in besonders einfacher und schneller Weise montiert bzw. demontiert werden. Die erfindungsgemäße Inverterstromquelle 1 ist dementsprechend vielseitig für unterschiedliche Anwendungsbereiche einsetzbar. Das Schweißgerät SG kann bei einer möglichen Ausführungsform über Punktschweißzangen verfügen. Die Punktschweißzangen sind Werkzeuge zum Widerstandspunktschweißen und dienen zur Herstellung von Widerstandsschweißverbindungen. Die Schweißzangen 10 dienen zum Punktschweißen und können von Hand oder durch Industrieroboter zum Schweißort geführt werden. Die erfindungsgemäße Inverterstromquelle 1 kann beispielsweise für derartige Industrieroboter vorgesehen werden.

Fig. 8 zeigt schematisch ein mögliches Ausführungsbeispiel für ein Widerstandspunktschweißgerät SG, welche eine Inverterstromquelle 1 gemäß der Erfindung verwenden kann. Die Inverterstromquelle 1 verfügt über eine Steuerung 11, welche die Leistungsstufe 4 der Inverterstromquelle 1 steuert. Die Leistungsstufe 4 beinhaltet die Netz-Gleichrichterschaltung 5, den Zwischenkreis 6 sowie die Wechselrichterschaltung 7, wie in dem Schaltbild gemäß Fig. 1 dargestellt. Am Ausgang der Leistungsstufe 4 ist ein Schweißtransformator 8 vorgesehen, welcher den transformierten Schweißstrom an die Elektroden 10A, 10B der Schweißzange 10 des Schweißgerätes SG abgibt. Ein Kraftsystem 21 kann die beiden Elektroden 10A, 10B auf zwei miteinander zu verschweißende bzw. zu verbindende Werkstücke WS an einem Schweißpunkt pressen. Die Inverterstromquelle 1 verfügt über eine Nutzerschnittstelle bzw. ein Bedienterminal 22 zur Einstellung von Schweißparametern und/oder zur Konfiguration der Entladezeit. Die Steuerung 11 der Inverterstromquelle 1 innerhalb des Schweißgerätes SG steuert vorzugsweise die Hydraulik des Kraftsystems 21 während des Schweißprozesses. Die Inverterstromquelle 1 kann in einem Schweißsystem bzw. Schweißgerät SG integriert sein oder über den Schweißtransformator 8 an das Schweißgerät SG angeschlossen werden. Die Nutzerschnittstelle bzw. das Bedienterminal 22 kann ebenfalls an der Inverterstromquelle 1 vorgesehen sein. Alternativ kann die Inverterschweißstromquelle 1 auch über ein entfernt gelegenes Bedienterminal über ein Netzwerk bedient werden. Die Inverterstromquelle 1 kann beispielsweise in einen Schaltschrank montiert sein und über ein Netzwerk mit einem entfernten Bedienterminal 22 verbunden sein. Die Schweißsteuerung 11 kann an Peripherieeinheiten angeschlossen sein, beispielsweise Ventile, Taster oder Roboter. Weiterhin können der Schweißsteuerung 11 auch Sensordaten zugeführt werden, beispielsweise Stromsensordaten, Spannungssensordaten, Wegsensordaten oder Kraftsensordaten. Die Inverterstromquelle 1 ist über seinen Netzanschluss 2 an ein Stromversorgungsnetz SKN angeschlossen, um selbständig Energie für den Schweißvorgang zu beziehen. Die Schweißsteuerung 11 steuert zusätzlich das hydraulische Krafterzeugungssystem 21.

## Patentansprüche

1. Inverterstromquelle (1) für ein Schweißgerät mit:
einer Netz-Gleichrichterschaltung (5) zur Gleichrichtung einer mehrphasigen Netz-Wechselspannung in eine Zwischenkreisspannung (U_{ZK});
einem Zwischenkreis (6), der mindestens einen Zwischenkreiskondensator (6A) als Energiespeicher und eine Begrenzungsschaltung (6B) aufweist, welche eine in dem Zwischenkreiskondensator (6A) gespeicherte Energie bei einem auftretenden Ereignis absenkt; und mit
einer Wechselrichterschaltung (7), welche die Zwischenkreisspannung (U_{ZK}) in eine Ausgangswechselspannung für einen mit der Inverterstromquelle (1) verbundenen Schweißtransformator (8) des Schweißgerätes umwandelt.

2. Inverterstromquelle nach Anspruch 1,
wobei die Begrenzungsschaltung (6B) am Ende eines Schweißvorganges die in den Zwischenkreis (6) fließende Energie absenkt, oder
wobei die Begrenzungsschaltung (6B) eine auftretende Erhöhung der Zwischenkreisspannung (U_{ZK}) zur Reduzierung der in dem Zwischenkreis (6) vorhandenen Energie absenkt, oder
wobei die Begrenzungsschaltung (6B) die in dem Zwischenkreiskondensator (6A) gespeicherte Energie bei Ausschalten eines Handschalters absenkt.

3. Inverterstromquelle nach Anspruch 1 oder 2,
wobei die Begrenzungsschaltung (6B) des Zwischenkreises (6) parallel zu dem Zwischenkreiskondensator (6A) verschaltet ist.

4. Inverterstromquelle nach einem der vorangehenden Ansprüche 1 bis 3,
wobei die Kapazität des Zwischenkreises (6) überwiegend durch einen Folienkondensator bereitgestellt wird.

5. Inverterstromquelle nach einem der vorangehenden Ansprüche 1 bis 4,
wobei die Begrenzungsschaltung (6B) des Zwischenkreises (6) ein steuerbares Schaltelement (SE) und zumindest einen dazu seriell verschalteten Hochleistungswiderstand (R_{ZK}) aufweist.

6. Inverterstromquelle nach Anspruch 5,
wobei das Schaltelement (SE) der Begrenzungsschaltung (6B) einen Halbleiterschalter aufweist, der durch eine Steuerung (11) der Inverterstromquelle (1) bei detektierter Überspannung am Zwischenkreis (6) zeitweise eingeschaltet wird, sodass sich der Zwischenkreiskondensator (6A) über den Hochleistungswiderstand (R_{ZK}) der Begrenzungsschaltung (6B) zur Absenkung der Zwischenkreisspannung (U_{ZK}) teilweise entlädt.

7. Inverterstromquelle nach Anspruch 6,
wobei die Begrenzungsschaltung (6B) und die Steuerung (11) der Inverterstromquelle (1) galvanisch getrennt sind, insbesondere durch einen Optokoppler (Optk).

8. Inverterstromquelle nach Anspruch 6 oder 7,
wobei die Steuerung (11) der Inverterstromquelle (1) nach Ausschalten der Inverterstromquelle (1) durch einen Hauptschalter (HS) das Schaltelement (SE) der Begrenzungsschaltung (6B) einschaltet, sodass sich der Zwischenkreiskondensator (6A) über den Hochleistungswiderstand (R_{ZK}) der Begrenzungsschaltung (6B) innerhalb eines vorgegebenen Entladezeitraums t_{off} ausreichend entlädt.

9. Inverterstromquelle nach einem der vorangehenden Ansprüche 5 bis 8,
wobei der Hochleistungswiderstand (R_{ZK}) der Begrenzungsschaltung (6B) durch einen anliegenden Kühlkörper (14) der Inverterstromquelle (1) gekühlt wird.

10. Inverterstromquelle nach Anspruch 9,
wobei der Kühlkörper (14) mit einer Montageplatte (16) der Inverterstromquelle (1) verbunden ist, die zur Montage der Inverterstromquelle (1) an ein Schaltschrankgehäuse eines Schaltschrankes vorgesehen ist.

11. Inverterstromquelle nach Anspruch 10,
wobei IGBT-Module der Wechselrichterschaltung (7) und/oder Thyristor-Diodenmodule der Netz-Gleichrichterschaltung (5) mit dem Kühlkörper (14) und der Montageplatte (16) der Inverterstromquelle (1) verbunden sind.

12. Schweißgerät mit einer Inverterstromquelle (1) nach einem der vorangehenden Ansprüche 1 bis 11,
wobei die von der Inverterstromquelle (1) abgegebene Ausgangswechselspannung primärseitig in einen Schweißtransformator (8) des Schweißgerätes eingespeist wird, welcher sekundärseitig über einen Gleichrichter (9) mit einer Schweißzange (10) des Schweißgerätes verbunden ist.

13. Schweißgerät nach Anspruch 12,
wobei das Schweißgerät ein Widerstandspunktschweißgerät ist.
